# EUROPEAN PATENT APPLICATION

(11) **EP 1 376 377 A1**
(43) Date of publication of application: **02.01.2004**
(21) Application number: 03254135.1
(22) Date of filing: 28.06.2003
(51) Int. Cl.: G06F 15/02, H04L 12/28

(54) **A method of storing data**

(30) Priority: 28.06.2002 GB 0215004; 30.12.2002 AU 2002325597
(71) Applicant: PC-OP Holding GmbH, 4312 Magden (CH)
(72) Inventor: Smith, Alrick Lockhart, 4312 Magden (CH)
(74) Representative: McCallum, Graeme David

(57) **Abstract**

A system for storing data for an electronic processing device (1) comprises encryption means to encrypt the data on the electronic processing device (1), a remote data storage device (6), transmission means (2,3,4,5,7) to transmit encrypted data from the electronic processing device (1) to the remote data storage device, and deletion means to delete the encrypted data transmitted to the remote data storage device (6) from the electronic processing device (1). The invention has the advantage that by storing data for the electronic processing device (1) on a remote data storage facility (6) the data can be recovered to another electronic processing device if the electronic processing device (1) is damaged, lost or stolen. The invention also has the advantage that subsequent deletion of the data from the electronic processing device (1) minimises the risk of unauthorised access to the data.

## Description

The invention relates to a method of storing data.

One of the problems with portable computers such as laptops and hand-held computers, is that if the computer is lost or stolen it is not possible to recover the data. In addition, there is also the risk that the data may be accessed by an unauthorised party.

In accordance with a first aspect of the present invention, there is provided a method of storing data for an electronic processing device comprising establishing a data communication link between the electronic processing device and a remote data storage device, transferring the data to the remote data storage device, and deleting the data transmitted to remote data storage device from the electronic processing device.

In accordance with a second aspect of the present invention, there is provided a system for storing data for an electronic processing device, the system comprising a remote data storage device, transmission means to transmit data from the electronic processing device to the remote data storage device, and deletion means to delete the data transmitted to the remote data storage device from the electronic processing device.

The invention has the advantage that by storing data for the electronic processing device on a remote data storage facility, the data can be recovered to another electronic processing device if the electronic processing device is damaged, lost or stolen. The invention also has the advantage that subsequent deletion of the data from the electronic processing device minimises the risk of unauthorised access to the data.

Preferably, the system further comprises encryption means to encrypt the data on the electronic processing device, and the data transmitted to the remote data storage device is the encrypted data.

In accordance with a third aspect of the present invention, there is provided a method of storing data for an electronic processing device comprising the steps of encrypting data in the electronic processing device, establishing a data communication link between the electronic processing device and a remote data storage device; and transferring the encrypted data to the remote storage device.

Typically, any encrypted data also on the electronic processing device is deleted after transfer of the encrypted data to the remote data storage facility.

Preferably, the electronic processing device is a computer and typically, may be a portable computer, such as a laptop, notebook or hand-held computer.

If the electronic processing device is a portable computer, the data communication link which is established may be at least partially a wireless data communication link.

Preferably, the data communication link may be established via a computer network, such as a local area network, a wide area network or the Internet.

An example of a method of storing data in accordance with the invention will now be described with reference to the accompanying drawing, in which:
Figure 1 is a schematic diagram of a laptop computer coupled to a server on the Internet;
Figure 2 is a flow chart illustrating various steps in a process embodying the present invention; and
Figure 3 is a schematic diagram of a laptop coupled to a secure data storage device in a different way.

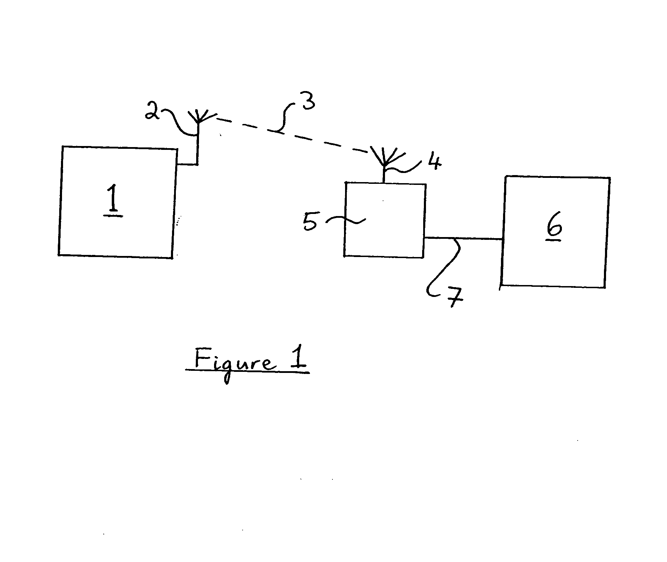

Figure 1 shows an electronic processing device in the form of a laptop computer 1 connected to a wireless communication device.

The wireless communication device 2 may be, for example, in the form of a PCMCIA card incorporating a mobile telephone network communication facility. Using the wireless communication device 2, the computer 1 can establish a wireless data communication link 3 to a mobile telephone network 5 via a base station 4. The mobile telephone network 5 can connect to a remote computer (or server) 6 via an Internet link 7.

In use, a user generates and/or modifies data on the computer 1. When the user is finished generating or modifying the data, the user instructs the computer 1 to encrypt the data using conventional encryption software and then to establish a data communications link between the laptop computer 1 and the remote server 6. The computer 1 establishes the data communications link with the remote server 6 using the wireless communication device 2 to establish a wireless communication link 3 with the mobile telephone network 5 via the base station 4 to connect the laptop computer 1 to the remote server 6 via the Internet 7.

After the data communication link between the laptop computer 1 and the remote server 6 is established, the laptop computer 1 transfers the encrypted data to the remote server 6 to store the encrypted data on the remote server 6.

After the laptop computer 1 has received confirmation that the data has been correctly received by the remote server 6, the laptop computer 1 terminates the data communication link to the server 6 by terminating the wireless communication link 3 to the mobile telephone network 5. After the data communication link has been terminated, the computer 1 then deletes the data on the computer 1 and can optionally delete the encrypted data transmitted to the server 6. Deletion of the data can be performed using a conventional deletion software.

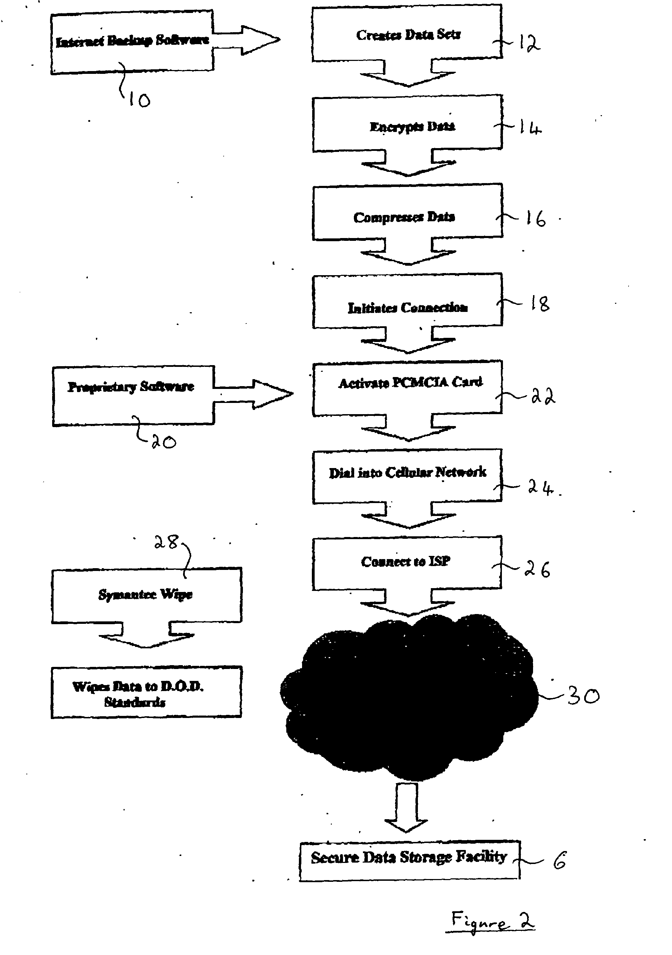

Figure 2 is a flow chart illustrating the steps of the process described with reference to Figure 1 in more detail. Internet backup software 10 is carried on the laptop. When the software is activated by the user the software automatically creates data sets (step 12), encrypts the data (step 14), compresses the data (step 16) and initiates the setting up of a connection to the Internet 7 for secure data transfer (step 18). The connection is established by any suitable proprietary software 20 which activates a PCMCIA card in the laptop (step 22), dials into a cellular network (step 24), and connects to an ISP (step 26) so that the laptop is connected to the Internet 7 and to the secure data storage facility 6 connected to the Internet. After the laptop receives confirmation of the successful transfer of the date a Symantec wipe is performed on the laptop (step 28) which wipes data on the laptop, typically, the data is wiped to an appropriate standard.

As an alternative to establishing a wireless communication link 3, the laptop computer 1 may establish the data communication link using a modem and a conventional land line or a computer network to which the computer 1 is connected and which is also connected to the Internet 7.

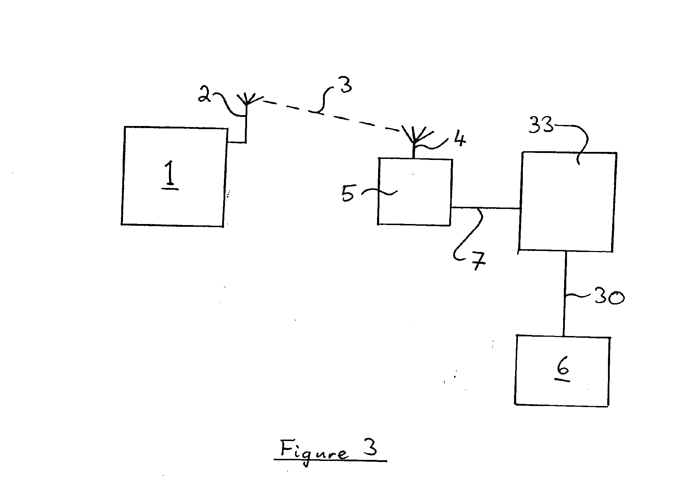

Figure 3 is a schematic illustration of a system embodying the present invention in which the laptop 1 connects to a secure private network 30 via the Internet 7. Access to the private network can be obtained via a freephone number ID and password. The private network 30 is connected to the secure data storage centre 6. It is also connected to the Internet via a firewall 38.

The invention has the advantage that by storing the data generated or modified on the computer 1 on the remote server 6, data can be retrieved from the server 6 without requiring the computer 1. This is an advantage if, for example, the computer 1 is lost or stolen. In addition, the advantage of erasing the data, which is transmitted to the remote server 6, from the computer 1 is that if the computer 1 is lost or stolen, the risk of a recipient of the lost or stolen computer obtaining unauthorised access to the data is reduced.

Furthermore, encrypting the data prior to transmitting the data to the remote server also ensures that the data is stored in the remote server in an encrypted state and reduces the risk of unauthorised access to the data on the remote server or unauthorised access to the data while it is being transmitted to the remote server 6.

## Claims

1. A method of storing data for an electronic processing device comprising establishing a data communication link between the electronic processing device and a remote data storage device, transferring the data to the remote data storage device, and deleting the data transmitted to the remote data storage device from the electronic processing device.

2. A method according to claim 1, further comprising the step of encrypting the data on the electronic processing device therein the data is transmitted to the remote data storage device in encrypted form.

3. A method according to claim 1 or claim 2, wherein the electronic processing device is a portable computer and the communication link which is established is at least partially a wireless data communication link.

4. A method according to claim 3, wherein the data communication link is established via a computer network, such as a local area network, a wide area network or the Internet.

5. A system for storing data for an electronic processing device, the system comprising a remote data storage device, transmission means to transmit data from the electronic processing device to the remote data storage device, and deletion means to delete the data transmitted to the storage device from the electronic processing device.

6. A system according to claim 5, further comprising encryption means to encrypt the data on the electronic processing device, arranged such that the data transmitted to the remote data storage device is encrypted data.

7. A system according to claim 5 or claim 6, wherein the electronic processing device is a portable computer, such as a laptop, notebook or hand-held computer.

8. A method of storing data for an electronic processing device comprising the steps of
encrypting data in the electronic processing device;
establishing a wireless data communication link between the electronic
processing device and a secure remote data storage device;
transferring the encrypted data to the remote data storage device; and
deleting the data transmitted to the secure remote data storage device.
